# EUROPEAN PATENT APPLICATION

(11) **EP 4 790 980 A1**
(43) Date of publication of application: **12.08.2026**
(21) Application number: 25157270.7
(22) Date of filing: 11.02.2025
(51) Int. Cl.: H04N 7/167, G06F 21/10, H04N 21/2347, H04N 21/6334, H04N 21/845, H04L 9/32, G06F 21/64

(54) **METHOD FOR PROVIDING AUTHENTICATED DIGITAL CONTENT**

(71) Applicant: Nagravision Sàrl, 1033 Cheseaux-sur-Lausanne (CH)
(72) Inventor: VORONINE, Roman, 1033 Cheseaux-sur-Lausanne (CH)
(74) Representative: Novagraaf International SA

(57) **Abstract**

A method of decoding authenticated content is executed by a digital content player. The method comprises: receiving (710) a list of hash values corresponding to encrypted encoded segments of a digital content; receiving (720) encrypted encoded segments of the digital content; for each of at least one of the received encrypted encoded segments: generating (730) a hash value of the encrypted encoded segment; authenticating (740) the encrypted encoded segment by determining whether the hash value is in the list of hash values; generating (750) a decoded segment by decrypting and decoding the encrypted encoded segment if the encrypted encoded segment is authenticated. A countermeasure may be taken if one or more of the encrypted encoded segments are not authenticated.

## Description

### TECHNICAL FIELD

Various example embodiments relate generally to a method of displaying authenticated content, methods of providing authenticated content, a digital content player, a content distribution platform and a content delivery network.

### BACKGROUND

MPEG-CENC is an encrypted media container format commonly used in DRM systems for video encoding. In the context of video decoding by a digital content player of a DRM system, a generic attack (named "DeCENC") on the MPEG-CENC file format has been developed. The DeCENC attack enables decryption of video files without knowledge of the decryption key. Any digital content player that correctly implements the MPEG-CENC specification is vulnerable to DeCENC. The DeCENC attack relies on interactions with video codec features present in either H264 (AVC) or H265 (HEVC), which are both widely supported by many digital content players. The DeCENC attack allows to retrieve the original compressed version of a video stream, after decryption.

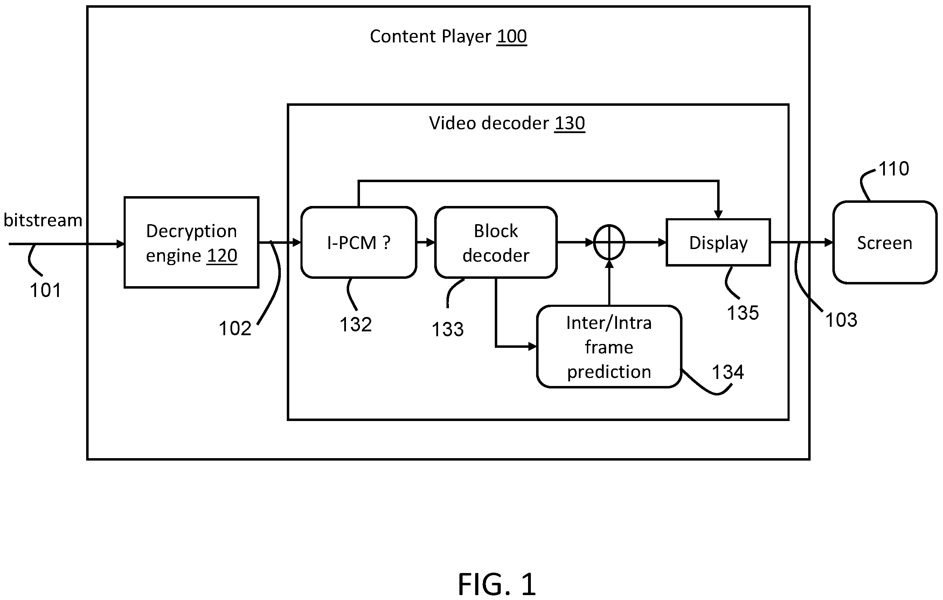

FIG. 1 illustrates the principles of a digital content player 100 according to a simplified example. The digital content player 100 include a decryption engine 120 for decryption and DRM rights management and a video decoder 130 interfaced with a display screen 110.

An input bitstream 101 including an encrypted encoded video is received by the digital content player 100, the encrypted encoded video including a temporal sequence of encrypted encoded frames including one or more macroblocks. Each of the received encrypted encoded frame is first decrypted by the decryption engine 120 to generate a decrypted encoded frame 102. Each decrypted encoded frame 102 is then decoded by the video decoder 130 to generate a decrypted decoded frame 103 for display by the screen 140.

In the video decoder 130, the decoding process works as follows. The decrypted encoded frames includes different types of macroblocks, among which I-PCM macroblocks. I-PCM macroblocks are macroblocks without spatial or temporal prediction and compression, while the other types of macroblocks are compressed based on inter-macroblock prediction or intra-macroblock prediction. The video decoder includes a functional block 132 that determines whether a current decrypted encoded macroblock is an I-PCM macroblock, and in case of a positive response, the I-PCM macroblock is directly transmitted (without change) to a display block 135 which provides the decoded macroblock to the screen 110 for display. If the current decrypted encoded macroblock is not an I-PCM macroblock, then the current decrypted encoded macroblock is transmitted for decoding to a block decoder 133 to generate a decrypted decoded macroblock. The macroblock decoder 133 may rely on an inter/intra block prediction 134 for decoding the current decrypted encoded video macroblock. The decrypted decoded macroblock is then provided to the display block 135 for display by the screen 110.

The DeCENC attack uses the specific behaviour of the video decoder for I-PCM macroblocks to "bypass" the decoder 133 (and prediction 134) by encapsulating encrypted encoded macroblocks of the video content in artificially generated I-PCM macroblocks inserted in the bitstream, where an artificially generated I-PCM macroblock may include specifically crafted random data for easier visual inspection. As a consequence, the artificially generated I-PCM macroblocks received by the digital content player are decrypted by the decryption engine 120 and transmitted directly for display to the screen 110, by bypassing the decoder 133. Once decrypted and displayed, the artificially generated I-PCM macroblocks can be captured from the screen 110, where the captured macroblocks are then XORed with the input macroblocks to retrieve the keystream, and the keystream is then used to decrypt the original frames using a XOR function.

Because of the above behaviour, the video decoder of the digital content player can be used as an oracle to decrypt specially crafted payloads which are then leveraged to decrypt the original video content, without the knowledge of the decryption key.

### SUMMARY

According to some aspects, there is provided the subject matter of the independent claims. Some further aspects are defined in the dependent claims.

The embodiments, examples and features, if any, described in this specification that do not fall under the scope of protection are to be interpreted as examples useful for understanding the various embodiments or examples that fall under the scope of protection.

According to a first aspect, a method of decoding authenticated content executed by a digital content player is disclosed. The method comprises: receiving a list of hash values corresponding to encrypted encoded segments of a digital content; receiving encrypted encoded segments of the digital content; for each of at least one of the received encrypted encoded segments: generating a hash value of the encrypted encoded segment; authenticating the encrypted encoded segment by determining whether the hash value is in the list of hash values; generating a decoded segment by decrypting and decoding the encrypted encoded segment if the encrypted encoded segment is authenticated. A countermeasure may be taken if one or more of the encrypted encoded segments are not authenticated.

Taking the countermeasure may comprise for example: blocking decrypting or decoding of one or more of the encrypted encoded segments. This prevents malicious use of the decoded or decrypted segments.

Taking the countermeasure may comprise for example: generating garbage data for display in replacement of the decoded segment. This prevents malicious use of displayed decoded segments.

Taking the countermeasure may be performed when the number of encrypted encoded segments that is not authenticated reaches a threshold. This allows to take into account potential false negative authentication check(s).

The method may comprise: receiving a Digital Rights Management, DRM, message including an authentication key and a message authentication code; downloading the list of hash values from a content delivery network or from a content distribution platform; authenticating the list of hash values using the received authentication key and the message authentication code.

The method may comprise: reporting an authentication failure if one or more of the encrypted encoded segments are not authenticated. This allows to take a countermeasure on content delivery network or content distribution platform side.

The list of hashed values may be received in a Digital Rights Management, DRM, message including a license including a cryptographic key for decrypting the digital content. This allows secure transmission of the list of hashed values.

The method may comprise: deleting the cryptographic key and requesting again the cryptographic key for decrypting the digital content if one or more of the encrypted encoded segments are not authenticated. This creates annoyance for a malicious user as the decryption process may be slow down or temporarily interrupted. Also this is a way to inform the content distribution platform / content delivery network of the presence of an anomaly.

According to another aspect, an apparatus (e.g., a digital content player) comprises means for carrying out a method according to the first aspect. The means may for example include at least one processor and at least one memory storing instructions that, when executed by the at least one processor, cause the apparatus to perform one or more or all steps of the method according to the first aspect. The means may for example include circuitry (e.g., processing circuitry) configured to perform one or more or all steps of the method according to the first aspect.

According to a second aspect, a method of providing authenticated digital content is disclosed. The method is executed by a content delivery network and comprises: providing, to a digital content player, an encrypted encoded segment of a digital content; providing, to the digital content player, a list of hash values corresponding to encrypted encoded segments of the digital content, wherein the list of hash values enables authenticating the encrypted encoded segment by determining whether a hash value of the encrypted encoded segment is in the list of hash values.

According to another aspect, a content delivery network (e.g., an apparatus or server of a content delivery network) comprises means for carrying out a method according to the second aspect. The means may for example include at least one processor and at least one memory storing instructions that, when executed by the at least one processor, cause the apparatus to perform one or more or all steps of the method according to the second aspect. The means may for example include circuitry (e.g., processing circuitry) configured to perform one or more or all steps of the method according to the second aspect.

According to a third aspect, a method of providing authenticated digital content is disclosed. The method is carried out by a content distribution platform and comprises: providing, to at least one of a content delivery network or a digital content player, encrypted encoded segments of a digital content; sending, to at least one of the content delivery network or the digital content player, a list of hash values corresponding to encrypted encoded segments of the digital content, wherein the list of hash values enables authenticating an encrypted encoded segment by determining whether a hash value of the encrypted encoded segment is in the list of hash values.

The method may comprise: sending, to the digital content player or the content delivery network, a Digital Rights Management, DRM, message including an authentication key and a message authentication code for authentication of the list of hash values.

The list of hash values may be sent in a DRM message including a license including a cryptographic key for decrypting the digital content.

The method may comprise: receiving an authentication failure message if one or more of the encrypted encoded segments are not authenticated.

According to another aspect, a content distribution platform (e.g., an apparatus or server of a content distribution platform) comprises means for carrying out a method according to the third aspect. The means may for example include at least one processor and at least one memory storing instructions that, when executed by the at least one processor, cause the apparatus to perform one or more or all steps of the method according to the third aspect. The means may for example include circuitry (e.g., processing circuitry) configured to perform one or more or all steps of the method according to the third aspect.

### BRIEF DESCRIPTION OF THE DRAWINGS

Some example embodiments will now be described with reference to the accompanying drawings.
FIG. 1, already described, illustrates the principles of a digital content player according to a simplified example.
FIG. 2 schematically illustrates a distributed system for digital content streaming or distribution according to one or more example embodiments.
FIG. 3 schematically illustrates a method for generating a list of hash values according to one or more example embodiments.
FIG. 4 schematically illustrates a method for authenticating a segment based on a list of hash values according to one or more example embodiments.
FIG. 5 is a block diagram of a digital content player according to one or more example embodiments.
FIG. 6 is a flow diagram of a method for authenticating digital content according to one or more example embodiments.
FIG. 7 shows a flowchart of a method for decoding authenticated content executed by a digital content player according to one or more example embodiments.
FIG. 8 shows a flowchart of a method for providing authenticated digital content according to one or more example embodiments.
FIG. 9 shows a flowchart of a method of providing an authenticated digital content according to one or more example embodiments.
FIG. 10 is a block diagram illustrating an exemplary hardware structure of an apparatus according to one or more example embodiments.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. The example embodiments are given by way of illustration only and thus are not limiting of this disclosure. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

One or more example embodiments describe methods for displaying authenticated content executed by a digital content player.

Currently the MPEG CENC encryption scheme, whether it is AES-CTR or AES-CBC, does not include any authentication, meaning the decryption engine (once loaded with the content key) decrypts any encrypted data block it receives.

A new encryption scheme with authentication is provided to authenticate the encrypted encoded segments of the original digital content, such that artificially generated I-PCM macroblocks that are not part of the original digital content can be detected. The authentication is performed on encrypted encoded segment to allows to detect the artificially generated I-PCM macroblocks even before these artificially generated I-PCM macroblocks are decrypted. The authentication may be likewise applied also to clear (not encrypted) parts of the original digital content. The encrypted encoded segments may be fully encrypted encoded segments or partially encrypted encoded segments.

This also allows to ensure backward compatibility with all existing encrypted encoded digital contents available for distribution as these existing encrypted encoded digital contents do not need to be altered in any manner. Especially all the authentication data (e.g., hash values) for the encrypted encoded segments of an encrypted encoded digital content may be generated directly from the encrypted encoded digital content.

Since the digital content is streamed and usually downloaded segment by segment (or group of segments per group of segments), the authentication data (e.g., hash values) may also be generated segment per segment to allow an authentication for each downloaded segment. This avoids downloading the whole stream and also to be able to jump to any temporal position in the stream at any time while allowing the authentication process to be performed based on the authentication data (e.g., hash values) associated with the current downloaded encrypted encoded segments.

The authentication data (e.g., hash values) may be provided to the digital content player as a list of hash values (referred to herein as the trusted list of hash values or simply the trusted list) in which the digital content player may search for a hash value computed by the digital content player for a received encrypted encoded segment.

The authentication data (e.g., hash values) may be stored separately. The authentication data (e.g., hash values) remains relatively small compared to the original digital content and can be generated by a crawler that will scan existing digital contents. The software of the decryption engine is updated to support the authentication feature, but there is no need to create a new version of the existing digital contents.

The authentication data (e.g., hash values) may be provided to the target digital content player in a secured manner to ensure the confidentiality and integrity of the authentication data. The authentication data may be transmitted using a DRM message. If the authentication data length is small enough then it may be completely incorporated inside the DRM message, otherwise only the required cryptographic material to protect and authenticate the authentication data may be transmitted in the DRM message.

For example, the trusted list may be received by the digital content player in a DRM message including a DRM license including a cryptographic key for decrypting the digital content.

For example, the digital content player may: receive a DRM message including an authentication key and a message authentication code, download the trusted list from a content delivery network or from a content distribution platform and authenticate the trusted list using the received authentication key and the message authentication code, e.g., by comparing the message authentication code generated from the downloaded trusted list by using the received authentication key.

Since the trusted list is securely transmitted, an attacker will not be able to precompute hash collisions offline (outside the DRM context), or the attacker will need to use a live system to perform the search, which will slow down the search and make it possibly detectable.

If one or more encrypted encoded segments are not authenticated (i.e., it fails the authentication check), a countermeasure may be taken. One or more countermeasures may be used. A countermeasure may correspond to one or more operations that are carried out in order to - directly or indirectly - prevent the display (and/or decoding and/or decrypting) of one or more segments (e.g., only the segments for which the authentication check fails or other or all segments). Several countermeasures may be used in combination as described in detail herein.

The authentication method is not limited to CENC and DRMs systems, and may be used in similar contexts against oracle attacks when the decryption scheme does not include any authentication data and the existing encrypted encoded digital contents cannot be altered in any manner.

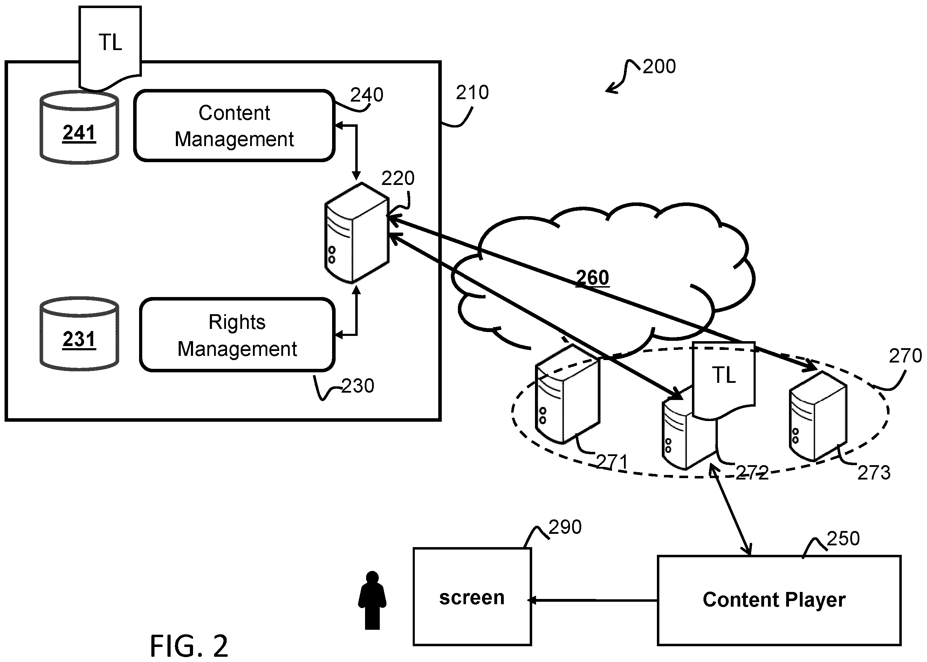

FIG. 2 is a schematic view of a distributed system 200 for digital content streaming or distribution according to one or more example embodiments.

The distributed system 200 may comprise a content distribution platform 210, a content delivery network or CDN 270, and a user device 250 associated with a display screen 290.

A client is a subscriber to the service of digital content streaming or distribution. A client account may be assigned to each client with the digital content streaming service, and include client identification information, and/or client credentials, rights. The client may use the service of digital content streaming with one or more user devices. In an embodiment, the client may have the right to simultaneously use the digital content streaming service with a predetermined number of user devices.

A token is a structure of data, or a message, that is digitally signed and/or encrypted by the content distribution platform 210. A token may be used to in the context of digital content streaming or distribution to define rights of a user with respect to one or more digital content. The content distribution platform 210 may for example be configured to transmit a content related access token for a selected content to the user device 250, said content related access token including authorization data for accessing the selected content. Then, when delivering the content over the content delivery network 270, the content related access token is transmitted by the user device 250 to the content delivery network 270, and checked by the content delivery network 270, which ensures that the content can only be delivered to a user device authorized to access the content.

The content distribution platform 210 may include or be connected to a content management system 240. The content management system 240 is adapted for storing digital contents in a content database 241 and/or receiving digital contents from content sources, encoding the digital contents and encrypting them with content keys.

The content distribution platform 210 may include or be connected to a right management system 230.

The right management system 230 may include or be connected to a DRM license server configured to distribute DRM licenses for digital contents to authorized user devices 250. A DRM license is a data structure including an encrypted content key for decrypting one or more digital content(s). The DRM license may include other data, such as usage rules. The DRM license server is configured to transmit the DRM license to the authorized user device 250, in response to a DRM license request including a valid authorization token (content related access token) signed by the content distribution platform 210.

The authorization process can be performed when a user device connects to the content distribution platform 210 and authenticates with the content distribution platform 210 to select a digital content. In case of successful authorization and authentication, the content distribution platform 210 may transmit an authorization token (content related access token) signed with a key shared by the DRM license server and the content distribution platform 210, to the authorized user device 250.

The right management system 230 may include or be connected to a client management system adapted for managing the client subscriptions and for storing information on clients in a client database 231 that have subscribed to the content streaming service. The management of clients and contents of a digital content streaming service is well-known and will not be described in more detail.

The user device 250 may be connected to the content distribution platform 210 and/or to at least one of the servers 271, 272, 273 of the CDN through a communication network 260, such as the Internet and / or a mobile communication network. The connection between the user device 250 and the content distribution platform 210 may be established through a front-end server 220 of the content distribution platform 210 to allow the user device 250 to communicate with one or more entities (e.g., DRM license server, a client management system, right management system 230 or content management system 240) of the content distribution platform 210.

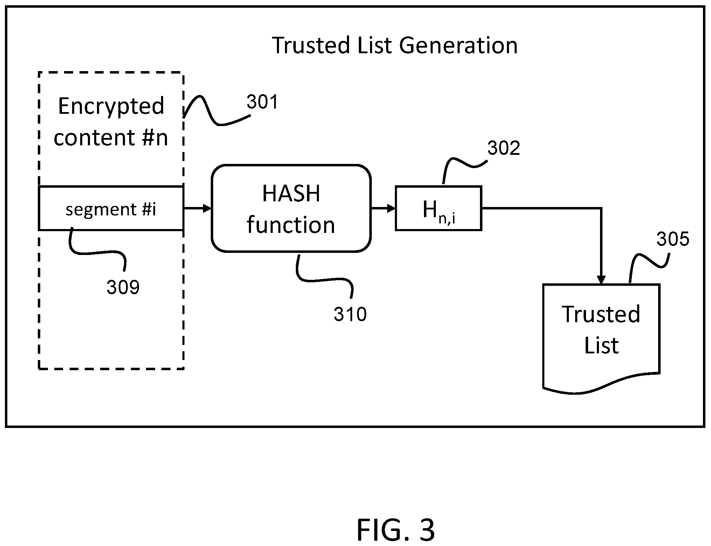

Each user device 250 may be or include a digital content player as described herein, for example by reference to FIG. 1 or FIG. 3. The digital content player may be implemented with software and/or hardware.

The digital content player may be configured to :
- authenticate with the content distribution platform 210,
- in case of successful authentication, select a digital content on the content distribution platform 210, receive an authorization token (a content related access token) to get a DRM license for the selected content, and receive a network address, such as a web address or URL, to access the selected content over the content delivery network 270,
- request, receive, decrypt, decode content segments for the selected digital content.

The content delivery network 270 is adapted for delivering or transmitting digital contents to one or more user devices 250. The digital contents may be received by the content delivery network 270 from the content distribution platform 210. The digital contents may be encrypted and segmented into digital content segments for being distributed segment by segment or group of segments by group of segments.

A digital content segment (also referred to herein simply as "segment") is a digital content file corresponding to a fragment of the digital content. For each digital content, the segments may be received by the content delivery network 270. The content segments may be cached into one or more servers of the CDN 270. The content related access token and/or the authorization data for accessing the digital content may be cached into one or more servers 271, 272, 273 of the CDN 270 together with the digital content segments. In operation, the servers 271, 272, 273 may receive digital content segment requests from user devices and, in response, transmit the requested digital content segments to the requesting user devices.

FIG. 3 schematically illustrates a method for generating a trusted list of hash values according to one or more example embodiments.

The generation of trusted lists of hash values for digital contents may be performed by a functional block of a content distribution platform 210.

A trusted list 305 of hash values is generated for a given digital content 301. A trusted list 305 of hash values may be generated for only some of the digital contents provided by the content distribution platform 210 or for all of them.

As represented by FIG. 3, for a given digital content #n 301, a trusted list 305 of hash values is generated for encrypted encoded segments of the considered digital content. A respective hash value H_{n,i} 302 may generated by a hash function 310 for each encrypted encoded segment #i 309 of the digital content #n 301 or only for some of the encrypted encoded segments composing the digital content #n 301.

Any hash function (e.g., any MAC function, cryptographic hash function, non cryptographic hash function can be used) 310 may be used, for example based on hash generation algorithms such that SHA-256, SHA-384, SHA-512, SHA1, MD5, etc.

As illustrated by FIG. 1, the trusted list TL may be stored in association with the digital content by the content distribution platform 210 (e.g., in the content database 241) and/or the CDN 270. Alternatively, the trusted list TL may be stored may be stored in a separate database.

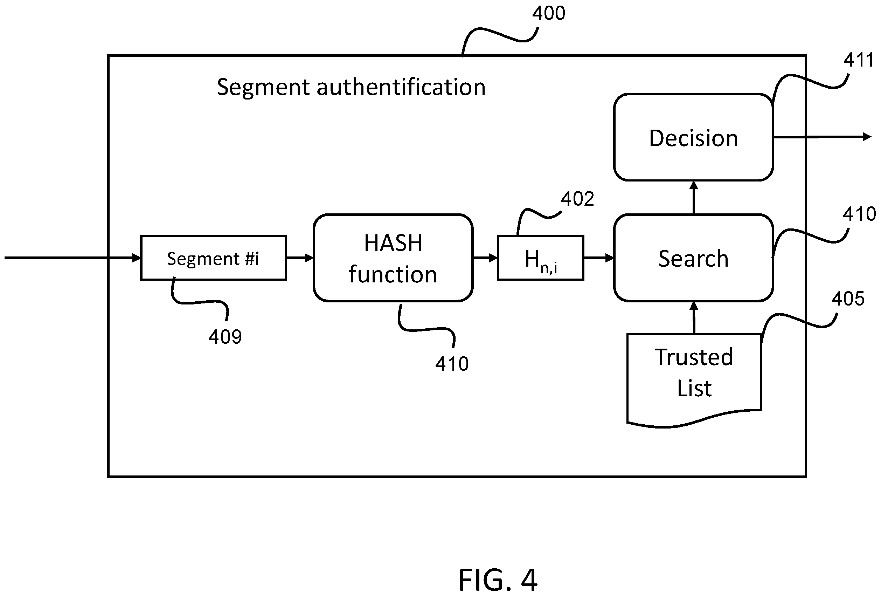

FIG. 4 schematically illustrates a method for authenticating a segment based on a trusted list of hash values according to one or more example embodiments.

The authentication of an encrypted encoded segment based on a trusted list 405 of hash values may be performed by a segment authentication function 400 of a digital content player 250.

The authentication may be performed for each encrypted encoded segment #i 409 of a digital content or only for some of the encrypted encoded segments composing the digital content.

For a given encrypted encoded segment, a hash value H_{n,i} 402 is generated by using a hash function 410. Like for FIG. 3, any hash function 410 may be used, for example based on hash generation algorithms such that SHA-256, SHA-384, SHA-512, SHA1, MD5, etc. Once the hash value H_{n,i} 402 is generated, a search block is configured to search for the hash value H_{n,i} in the trusted list 405 of hash values. If the searched hash value is found in the trusted list 405 of hash values, the corresponding segment is authenticated. Otherwise, if the searched hash value is not found in the trusted list 405 of hash values, the corresponding segment is not authenticated.

Searching a hash value in the trusted list is fast (especially when the trusted list is stored in temporal order, or ordered by values to permit a binary search, or the trusted list is a probabilistic data structure). Of course, there could be some false positives, but the hash function may be designed to keep the probability of false positive low enough to allow detection of the DeCENC attack for at least some of the encrypted encoded segment.

A decision block may be used at the output to provide a result of the authentication and/or an instruction to take a countermeasure and/or an identification of a countermeasure to be taken. Various types of countermeasures may be combined.

A countermeasure may be taken:
- each time a segment is not authenticated, or
- only when the number of received encrypted encoded segments that is not authenticated reaches a threshold, or
- based on any other countermeasure trigger condition.

To this end, the segment authentication function 400 may keep track of authentication failures with a counter that is updated for each authentication failure. The counter is an indicator that the system is being probed for an oracle attack or hash collision search. The counter is a persistent parameter and may be reported back, for example each time a DRM challenge is generated and sent to the digital content player. The counter may be reported to the content distribution platform 210 or the CDN 270 having provided the segment. The content provider may then take appropriate actions based on reported counter values (monitoring, retaliation, etc.).

A countermeasure may be taken by the content player and/or by the content distribution platform 210 and/or by the CDN 270.

A first countermeasure taken by the content player may include blocking decrypting or decoding of one or more encrypted encoded segments.

A second countermeasure taken by the content player may include generating garbage data for display in replacement of the decoded segment.

A third countermeasure taken by the content player may include deleting the current cryptographic key used for decrypting the received encrypted encoded segments and requesting again the cryptographic key for decrypting the digital content if one or more received encrypted encoded segments are not authenticated. Requesting the key once again which may trigger an alarm server side. In addition, time delays may be applied at every step to create annoyance and slow down the decryption process. In combination or in alternative, the maximum authorized quality for the given player may be degraded.

A fourth countermeasure taken by the content distribution platform 210 or the CDN 270 may include blocking or interruption the transmission of the encrypted encoded segments.

A fifth countermeasure taken by the content player may include reporting an authentication failure if an encrypted encoded segment is not authenticated. The authentication failure may be reported to the content distribution platform 210 or a server of the CDN 270 having provided the segment.

Reporting an authentication failure may cause the content distribution platform 210 (or the CDN 270 having provided the segment) to take one or more countermeasures on its side.

A countermeasure carried out by the content distribution platform 210 may for example be an action to cancel or limit the rights of the concerned user (e.g., the rights to download digital contents, for example by changing the DRM license allocated to the user).

A countermeasure taken by the content distribution platform 210 or the CDN 270 may include and/or an action to limit or forbid the sending of segments of the selected digital content.

Any of the countermeasure may be taken only after a given number of received encrypted encoded segments are not authenticated. An authentication failure counter may be used and incremented each time a received encrypted encoded segment is not authenticated, such that when the authentication failure counter reaches a threshold the countermeasure is taken.

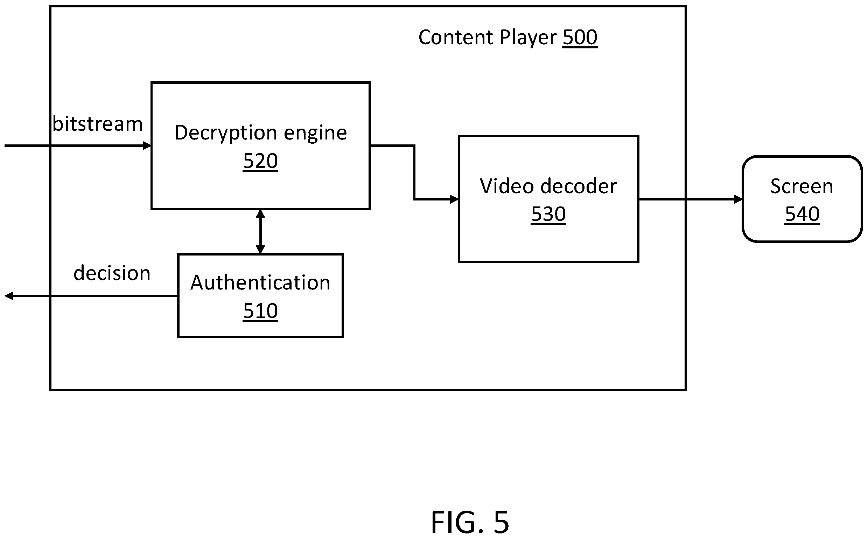

FIG. 5 is a block diagram of a digital content player 500 according to one or more example embodiments.

The digital content player 500 includes a decryption engine 520 that may be implemented as described for the decryption engine 120 with reference to FIG. 1 or according to any embodiment described herein.

The decryption engine 520 is configured for decryption and DRM rights management. The decryption engine 520 is configured to decrypt encrypted segments. It works as a "black box", transmitting a DRM license request including a received authorization token to the DRM license server, receiving in response the requested DRM license including a content key, receiving an encrypted segment and generating a decrypted segment. It may be implemented with software and/or hardware.

The digital content player 500 includes a video decoder 530 that may be implemented as described for the video decoder 130 with reference to FIG. 1 or according to any embodiment described herein.

The digital content player 500 includes a segment authentication function 510. The segment authentication function 510 may be implemented as described for the segment authentication function 400 with reference to FIG. 4 or according to any embodiment described herein. The segment authentication function 510 may communicate with the decryption engine 520 to receive a result of the segment authentication function 510 or be included in the decryption engine 520.

The decryption engine 520 may be configured to authenticate one or more or each encrypted encoded segment received by the decryption engine 520 before decrypting the considered encrypted encoded segment. This allows to prevent the I-PCM macroblocks in received encrypted encoded segment to be processed by bypassing the video decoder 530 and be directly displayed on the screen 540. This allows also to block decrypting and/or decoding of one or some or all of the received encrypted encoded segments in case of authentication failure for one or more received encrypted encoded segments.

The decryption engine 520 has timing constraints to generate and check whether a hash value is in the trusted list. To reduce this time, a space-efficient probabilistic data structure could be used (e.g. Bloom filter, cuckoo filter, etc.). The hash function may be chosen such that is the set of hashed values reduces or minimizes the risk of generation of false positive. In that case, this data structure is populated with hash the values of the segments of a given asset.

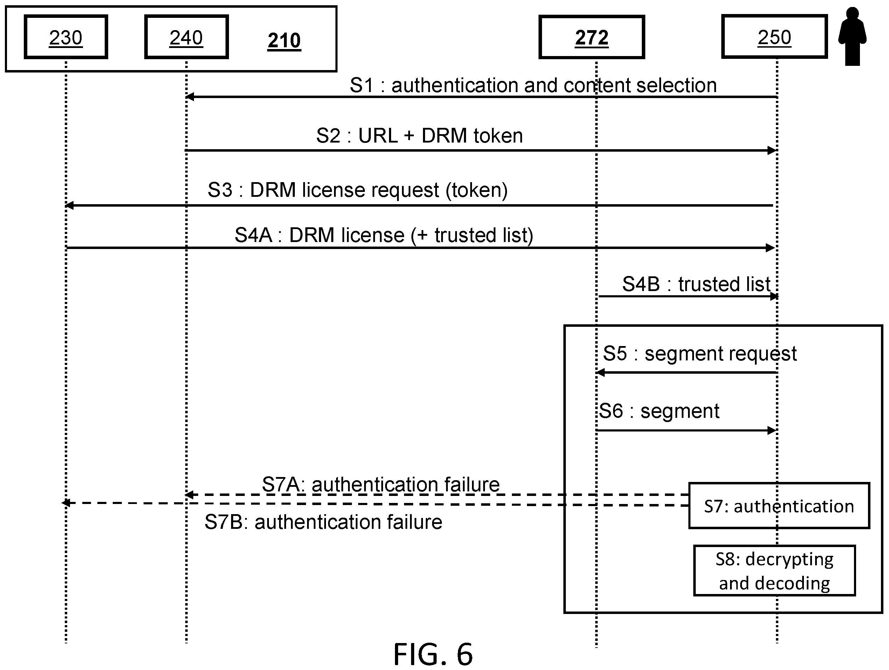

FIG. 6 is a flow diagram of a method for authenticating digital content according to one or more example embodiments.

The method involves several entities described with reference to FIG. 1: the right management system 230 and the content management system 240 of the content distribution platform 210, a server 272 of a CDN 270, a digital content player 250 (or user device 250) connected to the server 272 as an example.

In step S1: at least one DRM messages is sent by the digital content player 250 to the content management system 240 for authentication of the digital content player 250 with the content distribution platform 210 and selection of a digital content.

In step S2: in case of successful authentication, the digital content player 250 receives an authorization token (a content related access token) for the selected digital content. The message may include a network address, such as a web address or URL, to access the selected content.

In step S3: at least one DRM license request is sent by the digital content player 250 to the right management system 230 for requesting a DRM license, the DRM license request including the authorization token received in step S2.

In step S4A: in response to the message in step S3, a DRM response message including the DRM license is sent to the digital content player 250. The DRM license includes a cryptographic key for decrypting the selected digital content.

In embodiments, the trusted list of hash values associated with the selected digital content may be inserted in the response message of step S4A with the DRM license. Alternatively, the trusted list of hash values may be transmitted to the digital content player 250 in step S4B in a separate DRM message, for example by the server 272 of the CDN 270.

In step S5: a request for a segment of the selected digital content is sent to the server 272 of the CDN 270.

In step S6: in response, the segment of the selected digital content is sent by the server 272 of the CDN 270 to the digital content player 250.

In step S7: the received segment is authenticated by the digital content player 250. In case of authentication failure, one or more countermeasures may be taken as described for example with reference to FIG. 4.

Optionally, the authentication failure may be reported to at least one of the right management system 230 (step S7B) and the content management system 240 (step S7A). Reporting an authentication failure may cause the content distribution platform 210 to take one or more countermeasures on its side.

Taking the countermeasure may be carried out when the number of received encrypted encoded segments that is not authenticated reaches a threshold. Any countermeasure described herein may be taken. One or more countermeasures may be taken or combined.

In step S8: in case of authentication success, the received segment is decrypted and decoded by the digital content player and is sent to a screen for display.

Steps S5 to S8 may be repeated for several segments of the selected digital content.

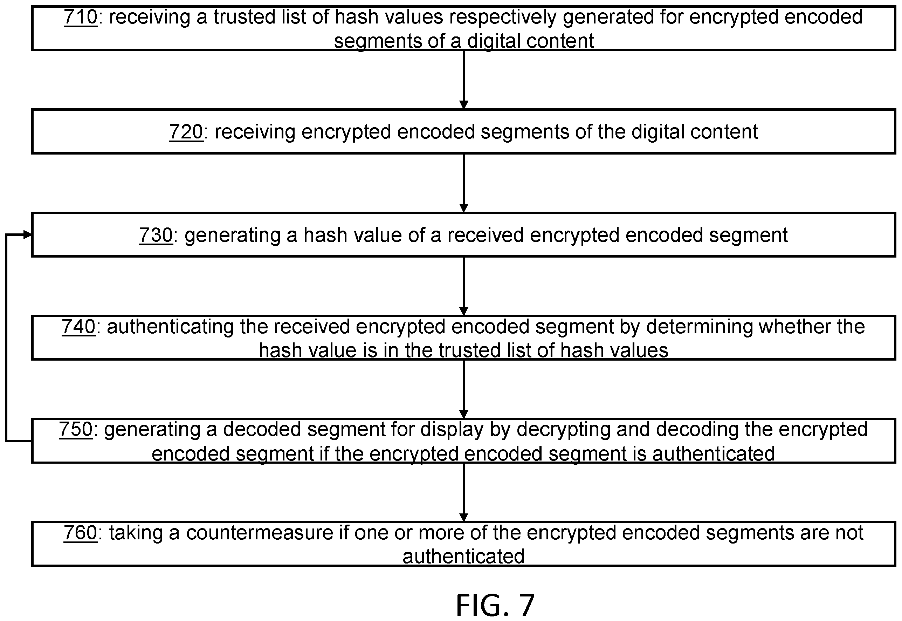

FIG. 7 shows a flowchart of a method for decoding authenticated content executed by a digital content player according to one or more example embodiments.

The steps of the method may be implemented by a digital content player 250, 500 according to any example described herein. The steps of the method may be combined for example with one or more steps disclosed herein, for example with reference to FIG. 6.

While the steps are described in a sequential manner, the person skilled in the art will appreciate that some steps may be omitted, combined, performed in different order and / or in parallel.

In step 710, a trusted list of hash values corresponding to encrypted encoded segments of a digital content is received.

In one or more embodiments, the trusted list may be received in DRM message including a license including a cryptographic key for decrypting the digital content.

In alternative embodiments, the trusted list may be downloaded from a content delivery network or from a content distribution platform and be authenticated using an authentication key and a message authentication code received in a DRM message, e.g., by comparing the message authentication code generated from the downloaded trusted list by using the received authentication key.

In step 720, encrypted encoded segments of the digital content are received.

Steps 730 to 750 may be carried out for each of one or more or all of the received encrypted encoded segments.

In step 730, a hash value of the considered encrypted encoded segment is generated.

In step 740, the considered encrypted encoded segment is authenticated by determining whether the hash value is in the trusted list of hash values.

In step 750, a decoded segment for display is generated by decrypting and decoding the considered encrypted encoded segment if the considered encrypted encoded segment is authenticated.

In step 760 (optional), a countermeasure may be taken if one or more of the encrypted encoded segments are not authenticated.

Taking the countermeasure may be carried out when the number of received encrypted encoded segments that is not authenticated reaches a threshold. Any countermeasure described herein may be taken. One or more countermeasures may be taken and combined. A countermeasure may be taken locally by the content player and/or by the content distribution platform 210 and/or by the CDN 270. Any example of countermeasure(s) described herein, especially with reference to FIG. 4, may be implemented.

In embodiment, an authentication failure may be reported if one or more of the encrypted encoded segments are not authenticated. The authentication failure may be reported to the content distribution platform 210 and/or the CDN 270.

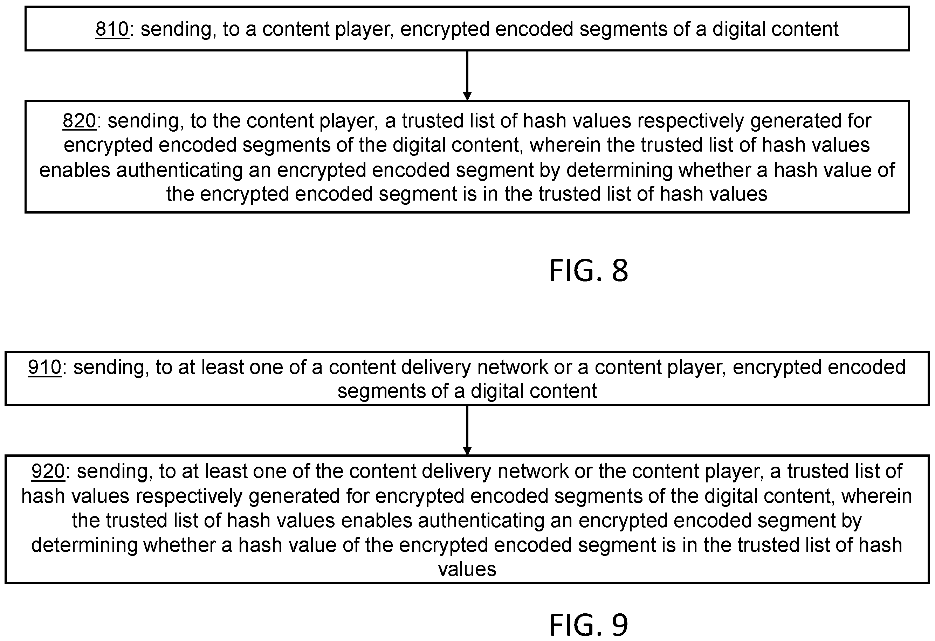

FIG. 8 shows a flowchart of a method for providing an authenticated digital content according to one or more example embodiments.

The steps of the method may be implemented by a content delivery network (e.g., by an apparatus in the content delivery network) according to any example described herein. The steps of the method may be combined for example with one or more steps disclosed herein, for example with reference to FIG. 6.

While the steps are described in a sequential manner, the person skilled in the art will appreciate that some steps may be omitted, combined, performed in different order and / or in parallel.

In step 810, the content delivery network sends, to a digital content player, encrypted encoded segments of a digital content.

In step 820, the content delivery network sends, to the digital content player, a trusted list of hash values corresponding to encrypted encoded segments of the digital content. The trusted list of hash values enables authenticating any of the encrypted encoded segments by determining whether a hash value of the considered encrypted encoded segment is in the trusted list of hash values.

In one or more embodiments, an authentication failure message may be received from the digital content player and be sent to a content distribution platform if one or more encrypted encoded segment are not authenticated by the digital content player.

FIG. 9 shows a flowchart of a method of providing an authenticated digital content according to one or more example embodiments.

The steps of the method may be implemented by a content distribution platform according to any example described herein. The steps of the method may be combined for example with one or more steps disclosed herein, for example with reference to FIG. 6.

While the steps are described in a sequential manner, the person skilled in the art will appreciate that some steps may be omitted, combined, performed in different order and / or in parallel.

In step 910, encrypted encoded segments of a digital content are provided by the content distribution platform to at least one of a content delivery network or a digital content player.

In step 920, a trusted list of hash values corresponding to encrypted encoded segments of the digital content is provided to at least one of the content delivery network or the digital content player. The trusted list of hash values enables authenticating any of encrypted encoded segments by determining whether a hash value of the considered encrypted encoded segment is in the trusted list of hash values.

In one or more embodiments, the trusted list may be sent in a DRM message including a license including a cryptographic key for decrypting the digital content.

In alternative embodiments, a DRM message including an authentication key and a message authentication code for authentication of the trusted list may be sent to the digital content player or the content delivery network.

In one or more embodiments, an authentication failure message may be received by the content distribution platform, from at least one of the content delivery network or the digital content player, if one or more encrypted encoded segment are not authenticated by the digital content player.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although steps of a method or process may be described in a sequential manner, some of the steps may be performed in parallel, concurrently or simultaneously. Also some steps may be omitted, combined or performed in different order.

One or more or all operation(s) of a method, process, function, engine, block, step described herein may be implemented in hardware, software, firmware, middleware, microcode, or any suitable combination thereof.

When implemented in software, firmware, middleware or microcode, instructions to perform the considered operation(s) may be stored in a computer readable medium that may be or not included in a computing device (or respectively a computing system) configured to execute the instructions. The instructions may be stored in the computer-readable medium and be loaded onto the computing device (or respectively computing system). The instructions, when executed by at least one processor, are configured to cause the computing device (or respectively computing system) to perform the considered operation(s).

In embodiments, the computing device (or respectively computing system) may include at least one processor and at least one memory storing the instructions that, when executed by the at least one processor, cause the computing device (or respectively computing system) to perform the considered operation(s). The instructions may correspond to program instructions or a computer program code.

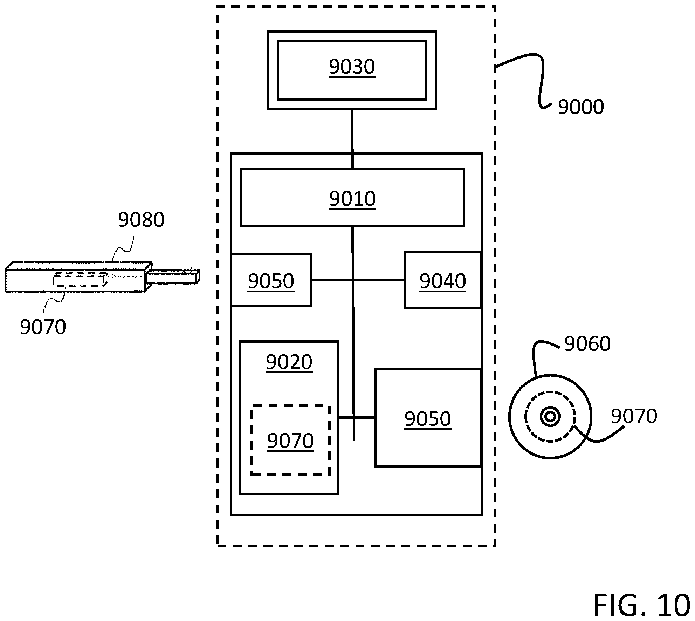

FIG. 10 illustrates an example embodiment of an apparatus 9000, as an example of computing device.

The apparatus 9000 may be or be included in a digital content player disclosed herein. The apparatus 9000 may be configured with means for performing one or more or all steps of a method disclosed therein, where the method is executed by a digital content player disclosed herein.

The apparatus 9000 may be included in a content delivery network (e.g., it may be a server of a content delivery network) disclosed herein. The apparatus 9000 may be configured with means for performing one or more or all steps of a method disclosed therein, where the method is executed by a content delivery network.

The apparatus 9000 may be included in a content distribution platform (e.g., it may be a server of a content distribution platform) disclosed herein. The apparatus 9000 may be configured with means for performing one or more or all steps of a method disclosed therein, where the method is executed by a content distribution platform.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc. In one or more embodiments, the means may include at least one processor and at least one memory including at least one memory storing instructions that, when executed by the at least one processor, cause the apparatus to perform the considered function(s). The means may include circuitry (e.g., processing circuitry) configured to perform the considered function(s).

The term "circuitry" may refer to hardware circuit implementations, with or without associated software and/or firmware. The term "circuitry" may refer to one or more circuits. A circuit may be a general-purpose circuit or a specific purpose circuit. A circuit may or not be a programmable circuit. A circuit may include one or more processors or one or more microcontrollers.

As represented schematically, the apparatus 9000 may include at least one processor 9010 and at least one memory 9020. The apparatus 9000 may include one or more communication interfaces 9040 connected to the processor. The communication interfaces 9040 may include interfaces for connecting peripherals (e.g., USB interfaces, HDMI interfaces) or network interfaces for accessing to a wired / wireless network (e.g., Ethernet interface, WIFI interface, Bluetooth interface). The apparatus 9000 may include user interface devices 9030 (e.g., keyboard, mouse, display screen) connected with the processor 9010. The apparatus 9000 may further include one or more media drives 9050 for reading a computer-readable storage medium (e.g., digital storage disc 9060 (CD-ROM, DVD, Blue Ray), USB key 9080). The processor 9010 may be connected to each of the other components 9020, 9030, 9040, 9050 in order to control operation thereof.

The memory 9020 may be or include a random-access memory (RAM), cache memory, non-volatile memory, backup memory (e.g., programmable or flash memories), read-only memory (ROM), a hard disk drive (HDD), a solid-state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), a Graphical Processing Unit (GPU), an arithmetic logic unit (ALU), a programmable logic unit (PLU), a processing core, a programmable logic, a microprocessor, a microcontroller, a microcomputer, a quantum processor, any device capable of responding to and/or executing instructions in a defined manner and/or according to a logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid-state drive (SSD), a memory card, a core memory, a flash memory, or any combination thereof.

Although the terms first, second, etc., may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, when the term "and/or" is used in a list of items, it implies that the list may include any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

Although aspects have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

### LIST OF ABBREVIATIONS

- AES-CBC: Advanced Encryption Standard Cipher-block chaining mode
- AES-CTR: Advanced Encryption Standard Counter Mode
- AVC: Advanced Video Coding (H.264)
- CENC: Common Encryption Scheme
- DRM: Digital Rights Management
- HEVC: High Efficiency Video Coding (H.265)
- MD5: Message Digest Algorithm 5
- MPEG: Moving Picture Expert Group
- PCM: Pulse Code Modulation
- SHA: Secure Hash Algorithm

## Claims

1. A method of decoding authenticated content executed by a digital content player, the method comprising
- receiving (710) a list of hash values corresponding to encrypted encoded segments of a digital content;
- receiving (720) encrypted encoded segments of the digital content;
for each of at least one of the received encrypted encoded segments:
- generating (730) a hash value of the encrypted encoded segment;
- authenticating (740) the encrypted encoded segment by determining whether the hash value is in the list of hash values;
- generating (750) a decoded segment by decrypting and decoding the encrypted encoded segment if the encrypted encoded segment is authenticated.
- taking (760) a countermeasure if one or more of the encrypted encoded segments are not authenticated.

2. The method of claim 1, wherein taking the countermeasure comprises
- blocking decrypting or decoding of one or more of the encrypted encoded segments.

3. The method of claim 1 or 2, wherein taking the countermeasure comprises:
- generating garbage data for display in replacement of the decoded segment.

4. The method of any of claims 1 to 3, wherein taking the countermeasure is performed when the number of encrypted encoded segments that is not authenticated reaches a threshold.

5. The method of any of claims 1 to 4, comprising
receiving a Digital Rights Management, DRM, message including an authentication key and a message authentication code;
downloading the list of hash values from a content delivery network or from a content distribution platform;
authenticating the list of hash values using the received authentication key and the message authentication code.

6. The method of claim of any of claims 1 to 5, comprising:
- reporting an authentication failure if one or more of the encrypted encoded segments are not authenticated.

7. The method of any of claims 1 to 6, wherein the list of hashed values is received in a Digital Rights Management, DRM, message including a license including a cryptographic key for decrypting the digital content.

8. The method of any of claims 1 to 7, comprising:
- deleting the cryptographic key and requesting again the cryptographic key for decrypting the digital content if one or more of the encrypted encoded segments are not authenticated.

9. A method of providing authenticated digital content, the method being executed by a content delivery network and comprising
- providing (810), to a digital content player, an encrypted encoded segment of a digital content;
- providing (820), to the digital content player, a list of hash values corresponding to encrypted encoded segments of the digital content, wherein the list of hash values enables authenticating the encrypted encoded segment by determining whether a hash value of the encrypted encoded segment is in the list of hash values.

10. A method of providing authenticated digital content, the method being carried out by a content distribution platform and comprising
- providing (910), to at least one of a content delivery network or a digital content player, encrypted encoded segments of a digital content;
- sending (920), to at least one of the content delivery network or the digital content player, a list of hash values corresponding to encrypted encoded segments of the digital content, wherein the list of hash values enables authenticating an encrypted encoded segment by determining whether a hash value of the encrypted encoded segment is in the list of hash values.

11. The method of claim 10, comprising
sending, to the digital content player or the content delivery network, a Digital Rights Management, DRM, message including an authentication key and a message authentication code for authentication of the list of hash values.

12. The method of claim 10 or 11, wherein the list of hash values is sent in a DRM message including a license including a cryptographic key for decrypting the digital content.

13. The method of any of claims 10 to 12, comprising:
- receiving an authentication failure message if one or more of the encrypted encoded segment are not authenticated.

14. A digital content player (250, 500) comprising means for carrying out the steps of a method according to any of claims 1 to 8.

15. A content delivery network (270) comprising means for carrying out the steps of a method of claim 9.

16. A content distribution platform (210) comprising means for carrying out the steps of a method according to any of claims 10 to 13.
